# EUROPEAN PATENT APPLICATION

(11) **EP 3 086 272 A1**
(43) Date of publication of application: **26.10.2016**
(21) Application number: 15305591.8
(22) Date of filing: 20.04.2015
(51) Int. Cl.: G06Q 20/34, G06K 19/07

(54) **SELECTING AN APPLICATION ON A CARD**

(71) Applicant: OBERTHUR TECHNOLOGIES, 92700 Colombes (FR)
(72) Inventor: Aubin, Yann-Loïc, 92700 Colombes (FR)
(74) Representative: Santarelli

(57) **Abstract**

A card (10) comprises a secure element (20) with at least one external interface (12, 14). The card (10) comprises a user interface (35), a user interface processor (31) and an internal interface (38) between the secure element (20) and the user interface processor (31). The secure element (20) hosts a plurality of applications (23) and the card is configured to allow a user to select one of the plurality of applications (23) for use when the card communicates with the external reader (50) by signalling, between the user interface processor (31) and the secure element (20) an indication (29) of a mode selected by the user at the user interface (32) and storing, at the secure element, the mode indication (29). The secure element (20) stores response data (26) for use when responding to interrogation by the external card reader (50) and correspondence data (28) which indicates, for each of the modes, a correspondence between the mode and the response data (26) to be sent for that mode.

## Description

### BACKGROUND

Integrated circuit cards (ICC), or chip cards, are in widespread use. Chip cards typically support a contact interface in which an electrical connection is made between an external reader and conductive pads on the surface of the chip card, or a contactless interface in which a wireless (near field communication) connection is made between an external reader and an antenna within the chip card. Any reading of data from the card, or writing of data to the chip card, is performed via the contact interface or the contactless interface. Conventionally, it has been necessary for the chip card to be connected to a terminal having a card reader before a user can make any changes to the chip card, and any changes are made by the user interacting with the terminal and communication between the card reader and the chip card.

More recently, chip cards have been developed with a user interface such as a button or keyboard, and indicator lights or a display. A card of this kind is described in WO 2014/202261 A1. One function of this kind of card is to allow a user to select which of the applications on the card that they wish to use.

A problem in a chip card with a user interface is providing additional functionality to a user, while still maintaining a secure environment for processing applications.

### SUMMARY

An aspect of the invention provides a card comprising:
a secure element;
at least one external interface configured to permit communication between the secure element and an external card reader;
a user interface;
a user interface processor;
an internal interface between the secure element and the user interface processor;
   wherein the secure element is capable of hosting a plurality of applications and the card is configured to allow a user to select one of the plurality of applications for use when the card communicates with the external reader by:
signalling, between the user interface processor and the secure element an indication of a mode selected by the user at the user interface;
storing, at the secure element, the mode indication;
storing, at the secure element, response data for use when responding to interrogation by the external card reader, the response data comprising data about the applications hosted by the card;
storing, at the secure element, correspondence data which indicates, for each of the modes, a correspondence between the mode and the response data to be sent for that mode.

The correspondence data may comprise a table and the mode indication may be an index value which indicates an entry in the table of correspondence data.

The response data may comprise a set of records or templates for the applications hosted by the card and the correspondence data indicates, for each of the modes, a particular record or template to be sent for that mode.

The at least one external interface may comprise at least one of a contact-based external interface and a contactless external interface.

The table of correspondence data may comprise:
first correspondence data which indicates, for each of the modes, a correspondence between the mode and the response data for use with communication via the contact-based external interface;
second correspondence data which indicates, for each of the modes, a correspondence between the mode and the response data for use with communication via the contactless external interface.

The card may be configured to signal, between the user interface processor and the secure element, an indication of whether the contactless external interface is to be used.

The first correspondence data may be for a Payment System Environment, PSE, and the second correspondence data may be for a Proximity Payment System Environment, PPSE.

The secure element may be configured to only send the response data corresponding to the user-selected mode via the external interface and not to send the response data corresponding to the non-selected modes when the secure element is interrogated by the external card reader.

The secure element may be configured to perform authentication with the external card reader when a change is made to the response data via the external interface and wherein the secure element is not configured to perform authentication with the user interface processor when a new mode is signalled to the secure element via the internal interface.

The card may also be configured to operate in a mode in which, when the secure element is interrogated by the external card reader, the secure element is configured to send the response data corresponding to all of the applications supported by the card. This corresponds to conventional operation under PSE or PPSE.

Another aspect of the invention provides a method of operating a card comprising a secure element, at least one external interface configured to permit communication between the secure element and an external card reader, a user interface and a user interface processor, the method comprising:
hosting a plurality of applications on the secure element; and
signalling, between the user interface processor and the secure element an indication of a mode selected by a user at the user interface, the mode corresponding to one of the plurality of applications to be used when the card communicates with the external reader;
storing, at the secure element, the mode indication;
storing, at the secure element, response data for use when responding to interrogation by the external card reader, the response data comprising data about the applications hosted by the card;
storing, at the secure element, correspondence data which indicates, for each of the modes, a correspondence between the mode and the response data to be sent for that mode.

The response data may comprise a set of records or templates for the applications hosted by the card and the correspondence data indicates, for each of the modes, a particular record or template to be sent for that mode.

The method may further comprise only sending the response data corresponding to the user-selected mode via the external interface and not sending the response data corresponding to the non-selected modes when the secure element is interrogated by the external card reader.

The at least one external interface may comprise at least one of a contact-based external interface and a contactless external interface and the table of correspondence data may comprise:
first correspondence data which indicates, for each of the modes, a correspondence between the mode and the response data for use with communication via the contact-based external interface;
second correspondence data which indicates, for each of the modes, a correspondence between the mode and the response data for use with communication via the contactless external interface.

The method may further comprise a mode of operation where the secure element sends the response data corresponding to all of the applications supported by the card when the secure element is interrogated by the external card reader.

A card in accordance with an example of the present disclosure can allow selection of an application without the need to modify a Payment System Directory, a File Control Information template, or a similar store of response data on the secure element. Instead, the correspondence data points to elements within the Payment System Directory (PSE) or File Control Information (PPSE), or a similar store of response data, which are to be sent based on the mode selected by the user.

In an example of the present disclosure, the internal interface between the secure element and the user interface processor is not used for personalisation of the secure element. This can avoid the need for secure communication between the user interface processor and the secure element, and therefore avoid the need for additional crytopgraphic keys and key management for the internal interface.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect of the invention provides machine-readable instructions (software) which, when executed by a processor, perform any of the described or claimed methods. The machine-readable instructions may be stored on an electronic memory device, hard disk, optical disk or other machine-readable storage medium. The machine-readable medium can be a non-transitory machine-readable medium. The term "non-transitory machine-readable medium" comprises all machine-readable media except for a transitory, propagating signal. The machine-readable instructions can be downloaded to the storage medium via a network connection.

### BRIEF DESCRIPTION OF THE DRAWINGS

Embodiments of the invention will be described, by way of example only, with reference to the accompanying drawings in which:
Figure 1 schematically shows a card with a secure element and a user interface;
Figure 2 shows an example state diagram for the user interface section of the card of Figure 1;
Figure 3 shows an example of communication between the secure element and the user interface section of the card of Figure 1 to select an application;
Figure 4A shows communication between an external card reader and a card under a Payment System Environment (PSE);
Figure 4B shows a data structure sent to the card reader under PSE;
Figure 4C shows a data record forming part of a payment system directory;
Figure 4D shows an example of correspondence data which maps between the operating modes of the card and response data;
Figure 5A shows communication between an external card reader and a card under a Proximity Payment System Environment (PPSE);
Figure 5B shows a data structure sent to the card reader under PPSE;
Figure 6 shows an overview of the application selection process.

### DETAILED DESCRIPTION

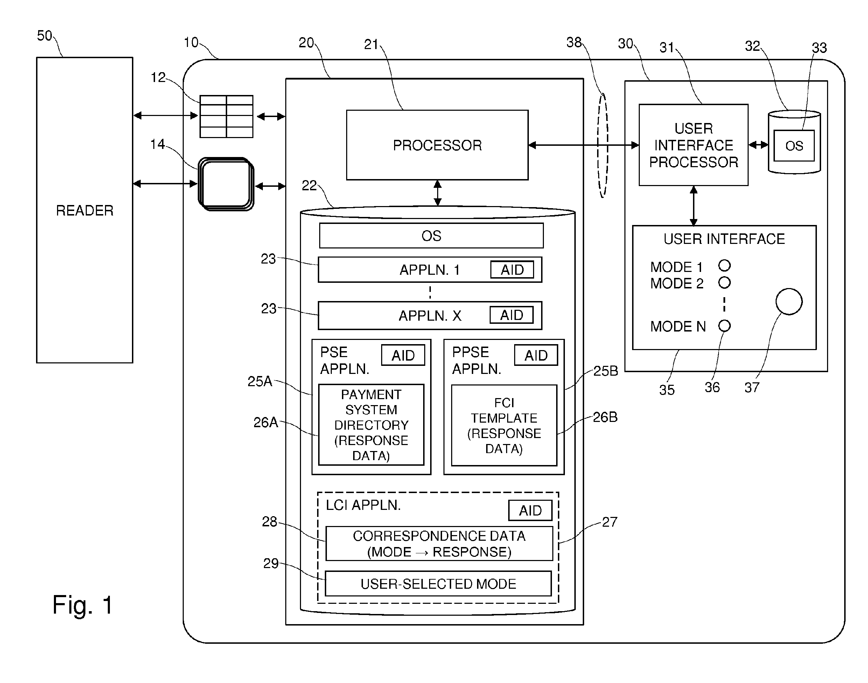

Figure 1 schematically shows an example of an integrated circuit card (ICC) 10, or chip card, with a user interface. The chip card 10 comprises a secure element 20 and a user interface section 30. The user interface section 30 can be in the form of a separate circuitry card which is housed within the body of the card 10. In this example the user interface section 30 comprises a microprocessor 31 which is operatively connected to a user interface 35 comprising a set of LEDs 36 and a button 37. The user interface section 30 may alternatively be called an LED card. An internal interface 38 is provided between the user interface section 30 and the secure element 20. In a preferred arrangement, the user interface section 30 also comprises a battery (not shown). The battery can allow the card to function when the card is not powered via an external card reader 50.

The secure element 20 comprises a processor 21 and storage 22. The secure element 20 is connected to at least one external interface 12, 14 for communicating with an external card reader 50. The external interface may be a contact interface 12 or a contactless interface 14. The secure element 20 may be provided with just a contact interface 12 or just a contactless interface 14, or the secure element 20 may be provided with both a contact interface 12 and a contactless interface 14. Communication with the external card reader 50 is typically via ISO 7816 APDUs. Communication with the external card reader 50 is authenticated.

Communication between the secure element 20 and the user interface section 30 over the internal interface 38 can also be in the form of ISO 7816 Application Protocol Data Units (APDU). In effect, the user interface section 30 operates as a specialised card reader integrated into the card 10.

The user interface processor 31 executes an operating system 33. The operating system 33 allows a user of the card 10 to select an operating mode. The card may support a total of N operating modes, where N is an integer greater than or equal to 1. For example, N=5. Each of the operating modes can correspond to one application, or a combination of multiple applications 23, available for use. A mode can correspond to an application for the contact interface and an application for the contactless interface. For example: operating mode 1 may make available a credit application via the contact interface and a credit application via the contactless interface; operating mode 2 may make available a debit application via the contact interface and no application via the contactless interface. As will be explained in more detail below, communication between the user interface processor 31 and the secure element 20 comprises an indication of a mode selected by a user. Authentication is not required between the user interface processor 31 and the secure element 20 because secure data is not communicated between them. This means that the user interface processor 31 and the secure element 20 do not need to hold common or corresponding cryptographic keys, which provides a significant saving in key management when the total volume of cards in circulation is considered (e.g. hundreds of thousands or millions of cards).

The secure element 20 can store a plurality of applications 23. Figure 1 shows X applications, where X is an integer. Each application may be Europay, MasterCard, and Visa (EMV) compliant. Each application has an Application Identifier (AID). The secure element 20 also stores a Payment System Environment (PSE) application 25A, a Proximity Payment System Environment (PPSE) application 25B, and an LED Card Interface (LCI) Application 27. PSE is defined in "EMV® Integrated Circuit Card Specifications for Payment Systems Book 1 Application Independent ICC to Terminal Interface Requirements", published by EMVCo. PPSE is defined in "EMV® Contactless Specifications for Payment Systems Book B Entry Point Specification", published by EMVCo. The PSE application 25A is an entry point for an external card reader 50 when the card is interrogated via the contact external interface 12. The PSE application 25A comprises a data structure 26A. This data structure 26A comprises information about applications supported by the card and is called a Payment System Directory under PSE. This data structure 26A comprises response data which can be sent to the external card reader 50. Similarly, the PPSE application 25B is an entry point for an external card reader 50 when the card is interrogated via the contactless external interface 14. The PPSE application 25B comprises a data structure 26B. This data structure 26B comprises information about applications supported by the card and is called a File Control Information (FCI) template under PPSE. The data structure 26B comprises response data which can be sent to the external card reader 50. In this specification, the general term "response data" is used to represent stored data about applications which may be sent to an external card reader 50.

The secure element 20 stores an indication 29 of an operating mode selected by a user via the user interface section 30. The secure element 20 also stores correspondence data, or mapping data, 28 which indicates, for each of the modes, a correspondence (mapping) between the mode and the response data 26A, 26B which should be sent to a card reader when the secure element 20 is interrogated for information about applications supported by the card. The indication 29 of the mode selected by the user and the correspondence data 28 may be stored within a functional block 27 which will be called a user interface Application 27, or an LED Card Interface (LCI) Application 27. The LCI Application 27 has an Application Identifier (AID) which is different to the AIDs of other applications on the secure element 20. The user interface processor 31 can communicate with the LCI Application 27 by sending an APDU with the AID of the LCI Application 27.

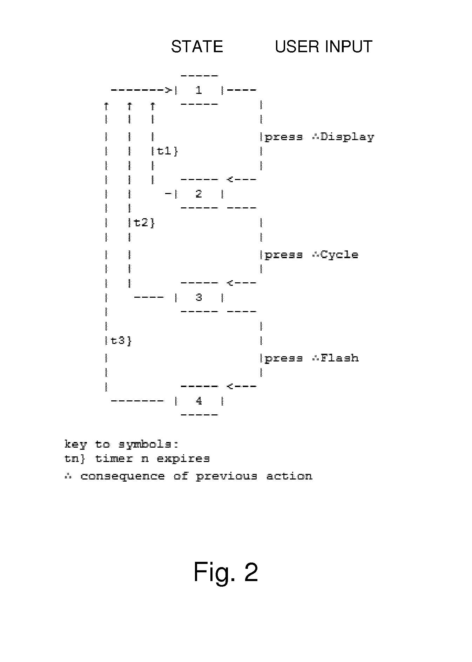

Figure 2 shows an example state diagram for the operating system of the user interface processor 31. The user interface OS begins in state 1. When the user presses the button 37 (Figure 1), a timer t1 is started, the state changes to state 2 and an LED corresponding to the currently selected mode is illuminated. The user interface OS remains in state 2 until the timer t1 expires. Upon expiry of timer t1 the user interface OS returns to state 1. If the user presses the button 37 while the user interface OS is in state 2, the state changes to state 3, a timer t2 is started, and the user interface OS illuminates each of the LEDs 36 in turn in a cycle. When the timer t2 expires, the user interface OS returns to state 1. If the user presses the button 37 while the user interface OS is in state 3, the state changes to state 4, a timer t3 is started and the OS flashes the LED 36 that was illuminated at the moment when the user pressed the button 37 while the user interface OS was in state 3. This serves to indicate the user's choice of a new mode. Each LED 36 may be accompanied by a printed indication on the card of an application corresponding to selection of that LED. For example, "Credit" alongside the first LED 36, "Debit" alongside the second LED 36, and so on.

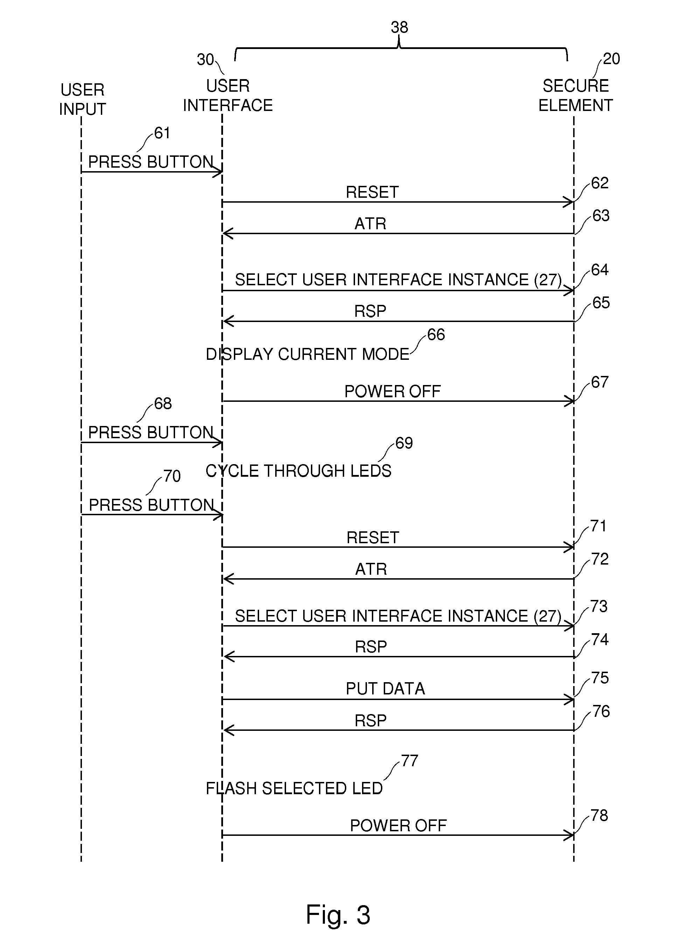

Figure 3 shows communication between the user interface section 30 and the secure element 20 to control selection of the operating mode. A first press of the button at 61 causes the user interface OS to reset the secure element 20 by sending a RESET command 62. The secure element 20 returns its ATR (answer to reset) 63, the user interface OS sends the secure element a SELECT command to select the functional block 27 (Figure 1). Functional block 27 can return the following items at 65:
- an indication of the currently selected mode;
- the total number of LEDs (1 to 5) supported by the card;
- a code associated with each mode that indicates whether the mode is a contact mode or a contactless mode;
- a configuration byte, used internally by the LED card operating system.

The total number of LEDs, the code associated with each mode and the configuration byte are set during personalisation of the LED card application.

The functional block 27 may only return a subset of these items. The user interface OS lights the LED corresponding to the currently selected mode at 66, and then powers off the card at 67. If the button is pressed at 68 while the user interface OS is still in state 2 (Figure 2), the user interface OS lights each of the LEDs in turn in a cycle at 69. If the button is pressed 70 while the user interface OS is in state 3 the user interface OS resets the secure element by sending a RESET command 71. The secure element 20 returns its ATR 72. The user interface OS sends a second SELECT command 73 with the same arguments as at 64 and return values from the secure element. The user interface OS sends a PUT DATA command 75 to the functional block 27. This signals to the functional block 27 which mode was selected by the user. Functional block 27 of the secure element updates the card mode and returns 76 a status word indicating successful execution of the PUT DATA command. The user interface OS flashes the LED corresponding to the newly selected mode at 77 and then powers off 78.

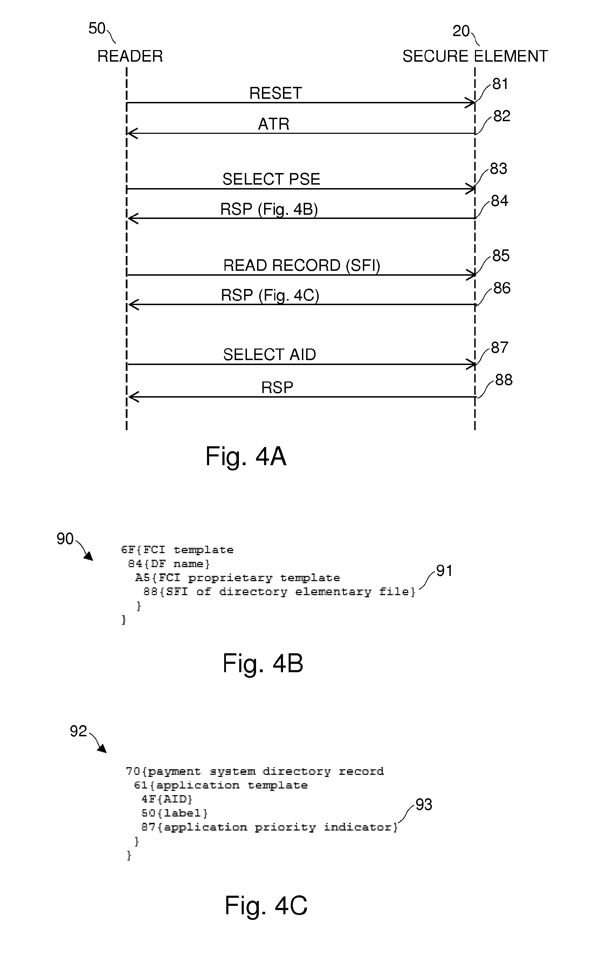

A brief overview will be provided of conventional operation between an external reader and a card before describing examples of the present disclosure. Figure 4A is a sequence diagram illustrating selection of an EMV application under a Payment System Environment (PSE). When a chip card is presented to a card reader 50, a communication exchange begins between the card reader 50 and the secure element 20 of the card 10. An EMV transaction begins with a Reset/ATR pair 81, 82 followed by a SELECT/RSP pair 83, 84. The EMV selection procedure begins by building a list of candidate applications. In order to do this, the card reader 50 fetches application identifiers (AIDs) from particular files or data structures stored on the card 10. Each AID is associated with a given priority. Once the list of AIDs supported by the card 10 is established, the reader 50 selects the application supported by the reader 50 that has the highest priority. The return value to the first SELECT command 83, sent in response 84, includes the data structure shown in Figure 4B. This data structure indicates the file 91 to read in order to find the identifiers of the applications supported by the card. This file is known as the "Payment System Directory". The conventional procedure is to read all the records in the Payment System Directory. One record is shown in Figure 4C. The reader will choose the record with the highest application priority indicator 93 of the applications that the reader supports.

This procedure is modified in accordance with an example of the present disclosure. A user of the card 10 can select an application which they wish to use when the card is interrogated by an external reader 50. The LCI application 27 stores an indication 29 of the user-selected mode. The procedure for communicating between an external card reader 50 and the card 10 is the same as shown in Figure 4A up to the point where the card reader 50 sends the READ RECORD command 85. At this point the procedure is modified. Logic at the secure element 20 checks the mode selected by the user and modifies the data retrieved by the READ RECORD command based on the mode, as follows:

```
       mode = currently selected mode from functional block 27;
       if mode == 0
              card behaves as a standard EMV card;
       else {
              n = get-configuration-byte;
              READ RECORD n from Payment System Directory;
       }
```

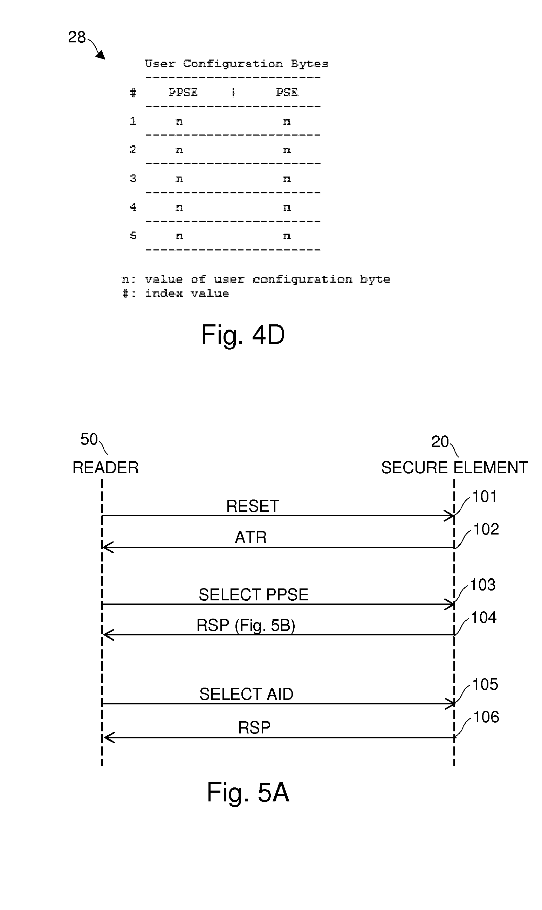

If the mode =0, the READ RECORD command operates in a conventional manner. It retrieves and sends records of the entire Payment System Directory to the card reader 50. If the mode =1, 2,..N, the READ RECORD command does not retrieve the entire Payment System Directory but, instead, retrieves a particular record within the Payment System Directory. Figure 4D shows an example of a table of correspondence data 28 which maps between the operating modes of the card and response data. The function "get-configuration-byte" performs a look-up in the table 28. The look-up location is the column "PSE" and the row corresponding to the value of the currently selected mode. The returned value from the cell of table 28 specifies the record in the Payment System Directory that should be sent to the card reader. The response 86 only includes that record of the Payment System Directory. The subsequent SELECT AID command 87 includes the AID of the application returned to the card reader at 86. In this way, the card reader 50 is forced to use the application selected by the user.

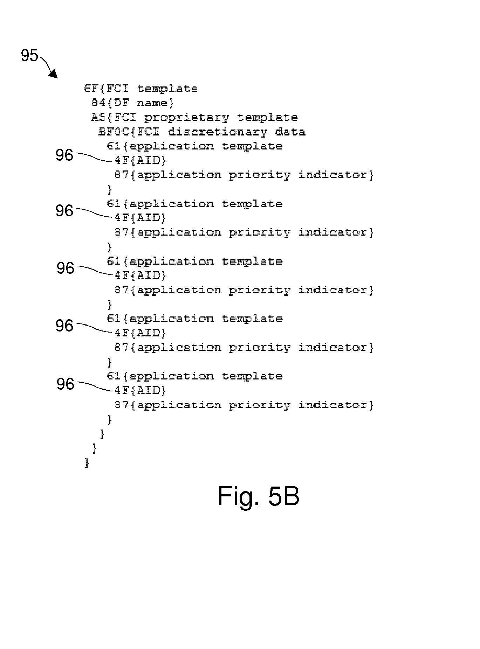

Figure 5A is a sequence diagram to illustrate selection of an EMV application under a Proximity Payment System Environment (PPSE). When a chip card is presented to a card reader 50, a communication exchange begins between the card reader 50 and the secure element 20 of the card 10. An EMV transaction begins with a Reset/ATR pair 101, 102 followed by a SELECT/RSP pair 103, 104. The EMV selection procedure begins by building a list of candidate applications. The list of applications supported by the card is contained directly in the response 104 to the SELECT PPSE command 103. The response is shown in Figure 5B. The response includes application identifiers (AIDs) 96 of applications supported by the card. Each AID is associated with a given priority. Once the list of AIDs supported by the card is established, the reader selects the application that is supported by the reader that has the highest priority.

This procedure is modified in accordance with an example of the present disclosure. A user of the card 10 can select an application which they wish to use when the card is interrogated by an external reader. The LCI application 27 stores an indication 29 of the user-selected mode. The procedure begins as shown in Figure 5A with a RESET/ATR pair 101, 102. The SELECT PPSE is modified. Logic at the secure element 20 checks the mode selected by the user and modifies the data retrieved by the SELECT PPSE command based on the mode, as follows:

```
       mode = currently selected mode from functional block 27;
       if mode == 0
              card behaves as a standard EMV card;
       else {
              n = get-configuration-byte;
              SELECT PPSE return modified FCI template;
       }
```

As with PSE, the logic uses a table 28 of correspondence data shown in Figure 4D. The function "get-configuration-byte" performs a look-up in the table 28. The look-up location is the column "PPSE" and the row corresponding to the value of the currently selected mode. The cell maps to a FCI containing just one of the application templates 96 corresponding to the operating mode/application selected by the user. The value of the cell in table 28 can be an index (n) to the n^{th} template in a set of templates. The response 104 only includes that template from the total set of templates. The subsequent SELECT AID command 105 includes the AID of the application returned to the card reader at 104. In this way, the card reader 50 is forced to use the application selected by the user.

An advantage of operating in this way is that the user interface section 30 is fully isolated from the details of the different payment system environments. The user interface section 30 interacts with a single functional block (the LCI application) 27 on the secure element 20. The mapping of the operating mode to a payment application is held in the LCI application 27, within the secure environment of the secure element 20. This arrangement means that there is no requirement for the user interface section 30 to hold any information about the particular payment applications running on the secure element, such as the AID (application identifier) or cryptographic keys required in order to access payment application files. When a user selects a different application at the user interface, there is no change to data stored at the secure element, other than to store a new value of the mode selected by the user. The LCI application 27 points to existing data stored in the data structures 26A, 26B. There is no need to modify the data structures 26A, 26B. The Payment System Directory 26A under PSE and the File Control Information template 26B under PPSE can be conventional.

In addition to the user-selectable modes, the card may have a default mode, e.g. mode = 0, in which when the secure element is interrogated by the external card reader 50, the secure element 20 is configured to respond in a conventional manner and send the response data corresponding to all of the applications supported by the card.

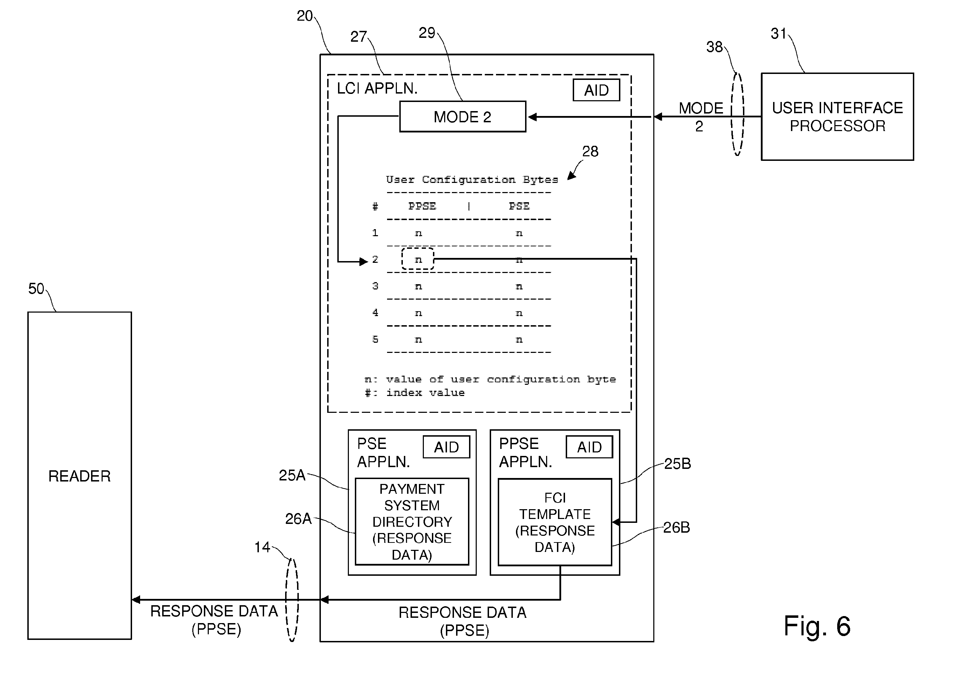

For completeness, Figure 6 shows an overview of the application selection process. In this example, a user makes a selection of operating mode 2 by operating the user interface. The user interface processor 31 signals to the secure element 20, via the internal interface 38, that mode 2 has been selected. The user interface processor 31 can send an APDU with the AID of the LCI Application 27. The secure element 20 stores an indication 29 that operating mode 2 was selected. Operating mode 2 corresponds to application 2 supported by the card, such as a debit application or some other application that the user wishes to use. The card is subsequently interrogated by a card reader 50. In this example, it is assumed that a contactless reader interrogates the card via a contactless external interface 14. The communication exchange detailed in Figure 5A occurs. When the secure element 20 is asked to supply details of the applications it supports, the secure element 20 responds with details of the application selected by the user (= application 2). This occurs by performing a look up in the table 28 of correspondence data, using the user-selected mode (2) as an index in the table 28. An entry in the table 28 at row 2 and column PPSE indicates a value n. Value n is used as an index to select a template to send in the response to the card reader 50. In this way, the card reader 50 only receives details of the application that the user wishes to use, and does not receive details of other applications. Therefore, the card reader is prevented from automatically selecting an application which the user does not wish to use. The selection of the application at the card 10 is made without the need to exchange any secure data between the secure element 20 and the user interface section 30 of the card. Personalisation of the card can be performed in a conventional manner, by using the external interfaces 12, 14 between the secure element 20 and the reader 50. No personalisation of the card is performed via the internal interface 38 between the secure element 20 and the user interface section 30.

The user interface section 30 of the card 10 may also allow a user to turn the contactless interface on or off. As part of the communication between the user interface section 30 and the secure element 20, the user interface section 30 may send data which indicates whether the contactless interface should be turned on/off for the selected mode. A response to the functional block 27 can include a byte of data which indicates, for each mode, whether the contactless interface should be turned on or off. For example, each bit position of this byte can represent a mode (bit 1 = mode 1, bit 2 = mode 2, etc.) and the value of the bit can indicate if the contactless interface is to be turned on or off (e.g. bit = "1" means contactless interface is switched on, bit = "0" means contactless interface is switched off.

Examples have been described in which the card supports a Payment System Environment (PSE) and a Proximity Payment System Environment (PPSE). The table of Figure 4D has two columns corresponding to PSE and PPSE. In other examples, the card may only support PSE or PPSE. The table shown in Figure 4D may be simplified to a single column.

Figure 1 shows a card 10 with a secure element 20 and a user interface section 30 embedded within the card 10. In another possible example, the secure element is hosted by an electronic device, such as a smart phone. The user interface section can be provided by user interface functionality of the host device, such as a graphical user interface (GUI) or a touch screen user interface. The functionality of the user interface may be provided by a processor which performs other tasks for the host device, rather than a dedicated user interface processor 31 as shown in Figure 1. The user interface of the host device allows a user to select an operating mode for the secure element. In a similar way to described above, the user interface section of the host device can communicate to the secure element an indication of a mode selected by the user at the user interface. Operation of the secure element is the same as described above.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A card comprising:
a secure element (20);
at least one external interface (12, 14) configured to permit communication between the secure element and an external card reader (50);
a user interface (35);
a user interface processor (31);
an internal interface (38) between the secure element (20) and the user interface processor (31);
wherein the secure element (20) is capable of hosting a plurality of applications (23) and the card is configured to allow a user to select one of the plurality of applications (23) for use when the card communicates with the external reader (50) by:
signalling, between the user interface processor (31) and the secure element (20) an indication (29) of a mode selected by the user at the user interface (32);
storing, at the secure element, the mode indication (29);
storing, at the secure element, response data (26) for use when responding to interrogation by the external card reader (50), the response data (26) comprising data about the applications (23) hosted by the card;
storing, at the secure element, correspondence data (28) which indicates, for each of the modes, a correspondence between the mode and the response data (26) to be sent for that mode.

2. A card according to claim 1 wherein the correspondence data (28) is a table and the mode indication (29) is an index value which indicates an entry in the table of correspondence data (28).

3. A card according to claim 1 or 2 wherein the response data comprises a set of records or templates for the applications hosted by the card and the correspondence data indicates, for each of the modes, a particular record or template to be sent for that mode.

4. A card according to any one of the preceding claims wherein the at least one external interface comprises at least one of a contact-based external interface (12) and a contactless external interface (14).

5. A card according to claim 4 wherein the table of correspondence data (28) comprises:
first correspondence data which indicates, for each of the modes, a correspondence between the mode and the response data (26A) for use with communication via the contact-based external interface (12);
second correspondence data which indicates, for each of the modes, a correspondence between the mode and the response data (26B) for use with communication via the contactless external interface (14).

6. A card according to claim 4 or 5 which is configured to signal, between the user interface processor (31) and the secure element (20), an indication (29) of whether the contactless external interface (14) is to be used.

7. A card according to claim 5 or 6 wherein the first correspondence data is for a Payment System Environment, PSE, and the second correspondence data is for a Proximity Payment System Environment, PPSE.

8. A card according to any one of the preceding claims wherein the secure element (20) is configured to only send the response data (26) corresponding to the user-selected mode via the external interface (12, 14) and not to send the response data (26) corresponding to the non-selected modes when the secure element (20) is interrogated by the external card reader (50).

9. A card according to any one of the preceding claims wherein the secure element (20) is configured to perform authentication with the external card reader (50) when a change is made to the response data via the external interface (12, 14) and wherein the secure element (20) is not configured to perform authentication with the user interface processor (31) when a new mode is signalled to the secure element (20) via the internal interface (38).

10. A card according to any one of the preceding claims which is also configured to operate in a mode in which, when the secure element is interrogated by the external card reader (50), the secure element (20) is configured to send the response data (26) corresponding to all of the applications supported by the card.

11. A method of operating a card comprising a secure element (20), at least one external interface (12, 14) configured to permit communication between the secure element and an external card reader (50), a user interface (35) and a user interface processor (31), the method comprising:
hosting a plurality of applications (23) on the secure element; and
signalling, between the user interface processor (31) and the secure element (20) an indication (29) of a mode selected by a user at the user interface (32), the mode corresponding to one of the plurality of applications to be used when the card communicates with the external reader (50);
storing, at the secure element, the mode indication (29);
storing, at the secure element, response data (26) for use when responding to interrogation by the external card reader (50), the response data (26) comprising data about the applications (23) hosted by the card;
storing, at the secure element, correspondence data (28) which indicates, for each of the modes, a correspondence between the mode and the response data (26) to be sent for that mode.

12. A method according to claim 11 wherein the response data comprises a set of records or templates for the applications hosted by the card and the correspondence data indicates, for each of the modes, a particular record or template to be sent for that mode.

13. A method according to claim 11 or 12 further comprising:
only sending the response data (26) corresponding to the user-selected mode via the external interface (12, 14) and not sending the response data (26) corresponding to the non-selected modes when the secure element (20) is interrogated by the external card reader (50).

14. A method according to any one of claims 11 to 13 wherein the at least one external interface comprises a contact-based external interface (12) and a contactless external interface (14) and the table of correspondence data comprises:
first correspondence data which indicates, for each of the modes, a correspondence between the mode and the response data (26) for use with communication via the contact-based external interface (12);
second correspondence data which indicates, for each of the modes, a correspondence between the mode and the response data (26) for use with communication via the contactless external interface (14).

15. A method according to any one of claims 11 to 14 further comprising a mode of operation where the secure element (20) sends the response data (26) corresponding to all of the applications supported by the card when the secure element is interrogated by the external card reader (50).
